# EUROPÄISCHE PATENTSCHRIFT

(11) **EP 0 952 947 B1**
(45) Veröffentlichungstag und Bekanntmachung des Hinweises auf die Patenterteilung: **31.10.2001**
(21) Anmeldenummer: 98907935.5
(22) Anmeldetag: 09.01.1998
(51) Int. Cl.: B64B 1/06, B64B 1/62, B64B 1/66

(54) **KREUZFAHRT-LUFTSCHIFF MIT ANKEREINRICHTUNG UND HELIUM-TEMPERIEREINRICHTUNG**
CRUISE AIRSHIP WITH AN ANCHOR ARRANGEMENT AND HELIUM-TEMPERING ARRANGEMENT
AERONEF DE CROISIERE AVEC DISPOSITIF D'AMARRAGE ET SYSTEME DE TEMPERATION DE L'HELIUM

(30) Priorität: 16.01.1997 DE 19701283; 17.10.1997 DE 19745893
(43) Veröffentlichungstag der Anmeldung: 03.11.1999
(73) Patentinhaber: Schäfer, Fritz, Peter, 37077 Göttingen (DE)
(72) Erfinder: Schäfer, Fritz, Peter, 37077 Göttingen (DE)
(74) Vertreter: Hertz, Oliver, Dr.
(86) Internationale Anmeldenummer: EP9800100
(87) Internationale Veröffentlichungsnummer: WO9831589

(56) Entgegenhaltungen:
- DE-A- 3 508 100
- GB-A- 1 548 884
- US-A- 1 567 703
- US-A- 1 603 384
- US-A- 1 679 565
- US-A- 1 741 446
- US-A- 2 191 759
- US-A- 3 185 411
- US-A- 3 533 578

## Beschreibung

Die Erfindung betrifft ein Starr-Luftschiff mit einem ellipsoiden Schiffskörper, das insbesondere für touristische oder expeditionsbezogene Reise-Kreuzfahrten geeignet ist.

Es herrscht allgemein die Ansicht, daß die Zeit der großen Starr-Luftschiffe (Zeppeline) vorbei sei. Das ist vor allem ein Resultat des Unglücks von Lakehurst (6. Mai 1937), bei dem das mit Wasserstoff als Traggas ausgestattete Luftschiff LZ 129 verbrannte, und der Tatsache, daß Flugzeuge heute etwa zehnmal schneller als Luftschiffe und zwanzigmal schneller als Schiffe sind. Deswegen ist praktisch der gesamte Langstrecken-Passagierverkehr vom Flugzeug übernommen worden.

Der Stand der Technik des Luftschiffbaus hat sich seit dem Ende des Groß-Luftschiffbaus um etwa 1940 praktisch nicht geändert. Als prototypisch für alle weiteren Luftschiffe gelten die letzten Zeppeline LZ 129 und LZ 130. Zwar wurden Entwürfe für ungewöhnliche Luftschiffe, etwa in Torusform, veröffentlicht (z.B. DE-OS 28 14 309), doch wurden diese wegen des ungeeigneten Aufbaus (z.B. Polyethylen-Außenhaut für einen Torus mit 400 m Durchmesser) in der Praxis nicht realisiert.

Für die bisher bekannten Groß-Luftschiffe bestehen insbesondere die folgenden drei Hauptprobleme:
1. Hohe Seitenwindempfindlichkeit durch Form und Leitflächen,
2. Fahren ohne Ballast und/oder Gasverlust, und
3. Landen und Verankern des Luftschiffs.

Bei herkömmlichen Luftschiffen waren Ballastabwurf und Gasablassen unverzichtbar. Zum einen wurde bisher beim Start des Luftschiffs zunächst Ballast abgeworfen (meist Wasser), um ein ausreichend schnelles Steigen auf eine Höhe von 50 bis 100 m zu erreichen, wo dann die Vortriebsmotoren angeworfen wurden, um danach das Luftschiff mit einem Anstiegswinkel von etwa 10° durch dynamischen Auftrieb auf die Reisehöhe zu bringen. Durch Luftdruckabnahme mit steigender Höhe dehnt sich das Traggas in den Gaszellen aus und erhält somit den Auftrieb, bis er in der gewünschten Reisehöhe durch Gasablassen erniedrigt wird, um dem Gewicht des Luftschiffs das Gleichgewicht zu halten und dieses dann in der horizontalen Normallage mit dem geringsten Widerstand weiterfahren kann (bei 10° Anstellwinkel erhöht sich der aerodynamische Widerstand bei Ellipsoiden um etwa ein Drittel). Entsprechend hat dann das Luftschiff einen zum Abstieg zu großen Auftrieb und kann i.a. nur durch dynamischen Abtrieb durch negativen Anstellwinkel nicht genügend schnell sinken, so daß nur Gasablassen übrigbleibt.

Des weiteren ergab sich eine Schwierigkeit durch den Treibstoffverbrauch, indem nämlich in den Motoren der Luftschiffe der Treibstoff zu gasförmigen Verbrennungsprodukten verbrannt wurde, die in die Atmosphäre entwichen, so daß ein dem Gewicht der verbrauchten Treibstoffe entsprechender Auftrieb entstand, der zunächst nur durch Ablassen von Traggas kompensiert werden konnte. Dies bedeutete bei einem Verbrauch von z. B. 80 t pro Fahrt einen Verlust durch Gasablassen von rund 70.000 m³ Traggas. Ein derartiger Gasverlust wäre bei dem heute als Traggas vorgeschriebenen Helium finanziell untragbar.

Bei LZ 130 konnte dieses Problem so gelöst werden, daß die Auspuffgase der Motoren durch eine Kühlanlage geleitet wurden, in der das Verbrennungswasser kondensierte und in die Ballastwassertanks geleitet wurde, wo es den Gewichtsverlust durch den Treibstoffverbrauch recht genau kompensierte. Jedoch ergab sich ein Mehrgewicht durch die Kühlanlage von 4 t und ein Treibstoff-Mehrverbrauch von 2t pro 100 Stunden Fahrt, so daß also 6 t weniger Nutzlast mitgeführt werden konnten.

Als weitere Möglichkeit zur Vermeidung von Heliumverlusten wird in der DE-OS 28 14 309 die Verflüssigung von Traggas durch eine im Luftschiff mitgeführte Gasverflüssigungsanlage als Abstiegshilfe für ein torusförmiges Luftschiff erwähnt. Dieses System ist jedoch an Größenverhältnisse des Luftschiffs gebunden, die praktisch nicht realisierbar sind.

Das für bemannte Luftschiffe einzig praktikable Traggas Helium ist das am schwierigsten zu verflüssigende Gas. Praktisch kommt bei großen Gasmengen nur die Kompression mit nachfolgender Abkühlung (unter Zuhilfenahme von flüssigem Stickstoff) und Dekompression unter externer Arbeitsleistung infrage. Nach diesem Verfahren hat die Fa. Linde-Kryotechnik (Winterthur) Anlagen (Antriebsleistung von 1850 kW) mit einer Leistung von 2.400 1 flüssigen Heliums pro Stunde verwirklicht. Die Erzeugung eines Liters flüssigen Heliums verbraucht insgesamt etwa 1 kWh, wobei der Verbrauch von flüssigem Stickstoff in diesem Prozess bereits berücksichtigt ist. Mit diesen Angaben kann man ausrechnen, daß zum Ausgleich von z. B. 80 t Gewichtsverlust durch den Treibstoffverbrauch rund 62.000 m³ Heliumgas verflüssigt werden müßte. Das bedeutet, daß durch den Leistungsverbrauch der Anlage aber ein Mehrverbrauch an Treibstoff von rund 12,5 t entsteht, der seinerseits durch weitere Verflüssigung von Helium kompensiert werden müßte, während die Verbrennungswasser-Rückgewinnungsanlage nur einen Treibstoff-Mehrverbrauch von 2,5 t hätte, der sich außerdem selbst kompensiert. Die Verwendung einer großen He-Verflüssigungsanlage nur zum Zwecke der Gewichtsverlust-Kompensation des Treibstoffverbrauchs ist daher nicht sinnvoll.

Ein weiteres Problem ist die Verankerung von Luftschiffen während und nach der Landung. Ein gängiges Verfahren ist das Zuwerfen von Manntauen aus dem Luftschiff an eine vielköpfige Hilfsmannschaft, die es daraufhin an den Ankerplatz zieht und es dort an Pfosten im vertaut. Anschließend wird das Luftschiff zum Witterungs- und Sturm-Schutz mit einer Fahreinrichtung oder durch die Haltemannschaft vom ursprünglichen Ankerplatz in eine große Halle überführt. Eine andere Methode ist die sogenannte "Verankerung am hohen Mast", bei der eine Einrastvorrichtung in der Bugspitze des Luftschiffs in ein Gegenstück an der frei drehbaren Spitze eines z. B. 50 m hohen Mastes eingreift. Passagiere, Besatzung und Fracht gelangen über eine Laufbrücke vom Luftschiff in die Mastspitze und von dort mit einem Fahrstuhl zum Boden. Diese beiden Verfahren sind von P. Kleinheins (Hrsg.) in "Die großen Zeppeline" (Düsseldorf, VDI-Verlag, 1996) dargestellt.

Diese Verfahren sind sehr material-, personen- und zeitaufwendig und kostenträchtig. Wo die erforderlichen Einrichtungen fehlen, ist ein Landen nur mit Gefahr und unter Schwierigkeiten möglich. Dies ist einer der wesentlichsten Punkte, weshalb bisher die Luftschiffahrt, insbesondere die mit großen Starr-luftschiffen, die als einzige Luftschiffklasse überhaupt für Personen- und Frachtverkehr in größerem Umfang infrage kommt, im wesentlichen so unwirtschaftlich war, daß sie in den letzten 50 Jahren keine Rolle mehr gespielt hat.

Es sind ferner kleinere Pralluftschiffe ("Blimps") bekannt, zu denen Verbesserungen z.B. für magnetische Verankerungen (US 4,238,095 und US 4,272,042) oder für die Verflüssigung des Traggases in einer Gasverflüssigungsanlage an Bord eines extrem großen Luftschiffs zur Erzeugung eines Abtriebs (DE-OS 28 14 309) veröffentlicht wurden. Diese Entwicklungen sind wegen der Größenunterschiede jedoch nicht geeignet, Anregungen für Weiterentwicklungen auf dem Bereich der Groß-Luftschiffe zu geben.

So lassen sich insbesondere die geschilderten Lande-Verfahren und -Einrichtungen nicht für Luftschiffe mit großen Passagierzahlen (z.B. rd. 350 Personen) skalieren und an die heutigen Sicherheitsvorschriften für den Personentransport anpassen. Das gilt auch für das Landeverfahren aus der oben angeführten US-Patentschrift, das sich wegen der verwandten Permanentmagnete nur für kleine Pralluftschiffe eignet. Ein Elektromagnet an der Gummi-Außenhaut des Prall-Luftschiffs wird dort nur für die Verankerung am Mast vorgeschlagen, wobei der Magnet nur ein sehr kleines Gewicht und damit geringe magnetische Kraft hat.

Aus US-A-1 603 384 ist eine Flugmaschine mit einem unregelmäßigen Schiffskörper bekannt, an dem zehn Flügel angebracht sind. Der Schiffskörper besitzt die Form eines langgestreckten, an den Enden zugespitzten, im Querschnitt abgeflachten Zylinders. Die DE-OS 35 08 100 beschreibt ein Hybrid-Flugzeug mit Senkrecht- und/oder Kurzstarteigenschaften mit einem in Längsrichtung nicht-rotationssymmetrischen Rumpf, dessen Querschnitt senkrecht zur Längsrichtung Ellipsenform besitzt.

Es ist die Aufgabe der Erfindung, ein verbessertes Starr-Luftschiff anzugeben, das eine geringere Seitenwindempfindlichkeit aufweist und mit dem eine erhöhte Passagierzahl bei verringertem Energieverbrauch pro Passagier transportiert werden kann und eine verbesserte Manövrierbarkeit besitzt.

Diese Aufgabe wird durch ein Luftschiff mit den Merkmalen gemäß Patentanspruch 1 gelöst. Vorteilhafte Ausführungsformen ergeben sich aus den abhängigen Ansprüchen. Gemäß bevorzugter Gestalhungen ist das Luftschiff dadurch gekennzeichnet, daß es keine Leit-und Ruderflächen aufweist, durch Aktuatoren in der Lage dynamisch geregelt und gesteuert wird, eine Helium-Temperiereinrichtung enthält, und/oder eine elektromagnetische Ankereinrichtung besitzt. Der erfindungsgemäße Aufbau ist im Unterschied zu Lastluftschiffen darauf gerichtet, daß eine große Passagierzahl mit der erforderlichen Bequemlichkeit und Sicherheit transportiert werden kann.

Vorteilhafte Anwendungen der Erfindung liegen ganz besonders im Passagierverkehr. Die Erfindung wird im folgenden ohne Beschränkung insbesondere unter Bezug auf den Passagierverkehr beschrieben. So sind in den letzten 30 Jahren Kreuzfahrten auf See als Vergnügungsreisen populär geworden. Damit eröffnet sich eine neue Existenzgrundlage für große Starr-Luftschiffe als Kreuzfahrt-Luftschiffe. Sie würden durch die Erreichbarkeit beliebig vieler Landziele eine ideale Ergänzung für Kreuzfahrtschiffe ergeben. Dabei entwickelt ein Kreuzfahrt-Luftschiff die doppelte Geschwindigkeit eines Schiffs, so daß es mehr Ziele während beispielsweise einer einwöchigen Kreuzfahrt ansteuern kann, wobei zumeist ein Interesse besteht, in Gehentfernung eines zu besichtigenden Monuments oder Aussichtspunktes oder dergleichen landen zu können. Selbstverständlich wird von den Passagieren ein vergleichbarer Luxus wie auf See erwartet. Aus diesen Gründen ist unter ökonomischen Gesichtspunkten eine gewisse Mindestzahl von Passagieren (z. B. 100 und 300 Passagiere) pro Kreuzfahrt-Luftschiff, erforderlich und damit auch die Größe des Luftschiffs praktisch schon näherungsweise festgelegt. Bei diesen Größenordnungen ist es auch leicht möglich, See- und Luft-Kreuzfahrten zu kombinieren, z. B. so daß zunächst eine einwöchige See-Kreuzfahrt erfolgt und nach Umsteigen auf das Kreuzfahrt-Luftschiff eine einwöchige Luft-Kreuzfahrt sich anschließt. Andererseits können Luft-Kreuzfahrten auch an Flughäfen starten und enden, so daß eine Flug-Anreise zur Luft-Kreuzfahrt erfolgen kann. Die allgemeine Logistik für solche Unternehmungen ist in der Luft- und Seefahrt bereits hochentwickelt.

Einzelheiten der Erfindung werden im folgenden unter Bezug auf die beigefügten Zeichnungen beschrieben. Es zeigen:
- Fig. 1:: eine schematische Seitensicht auf ein erfindungsgemäßes Luftschiff; und
- Fig. 2:: schematische Ansichten eines erfindungsgemäßen Luftschiffs mit Aktuatoreinrichtungen.

Die drei oben aufgeführten Hauptprobleme werden durch eine Reihe von im folgenden einzeln am Beispiel des als EL1 bezeichneten Luftschiffes beschriebenen Maßnahmen gelöst, die in Kombination vorgesehen sein können. Jede der Maßnahmen erfordert eine Berücksichtigung der Eigenheiten der für die beiden anderen Probleme vorgeschlagenen Lösungen, so daß es sich bei der Erfindung um ein einheitliches Ganzes handelt. Dies kann zunächst so erläutert werden: Die ungewöhnliche Form des Luftschiffs, die sich durch eine besonders niedrige Seitenwindempfindlichkeit auszeichnet, verlangt die unbedingte Vermeidung aller zusätzlichen Luftwiderstände, wie sie z.B. eine magnetische Landevorrichtung nach den oben erwähnten US-Patentschriften ergeben würde. Ferner erleichtert sie auch den Einbau einer Helium-Verflüssigungsanlage, die von den Vortriebsmotoren mitbetrieben werden kann. Die Helium-Verflüssigungsanlage wiederum erleichtert die Landung unter Verwendung der im folgenden beschriebenen Landevorrichtung. Herkömmliche Luftschiffkomponenten (z. B. die Bauform von Signaleinrichtungen o. dgl.) werden nicht gesondert beschrieben.

### 1. Luftschiff mit besonders geringer Seitenwindempfindlichkeit.

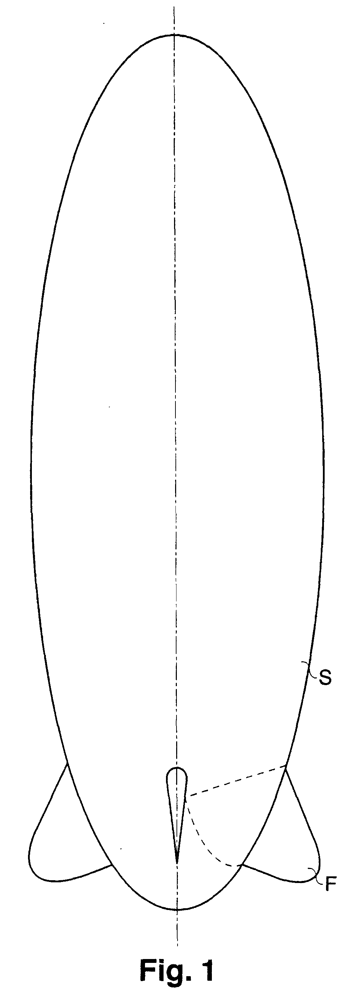

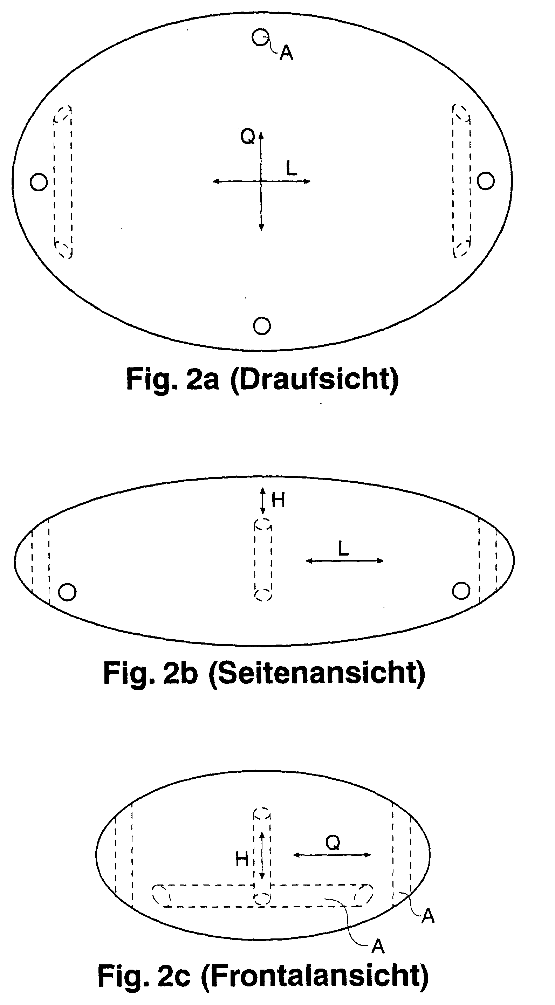

Das Luftschiff gemäß der Erfindung besitzt einen Schiffskörper S (siehe Figuren 1, 2), der als ein Ellipsoid konzipiert ist, das drei aufeinander senkrecht stehende unterschiedlich lange Achsen besitzt. Die Längsachse L, die im normalen Fahrbetrieb in Richtung dieser Achse horizontal liegt, ist die größte Achse, die Querachse Q, ebenfalls mit horizontaler Normallage hat eine mittlere Länge, während die Hochachse H mit vertikaler Normallage die kürzeste ist. Ein mögliches Ausführungsbeispiel hat z. B. ein Achsenlängenverhältnis des Schiffskörpers 1:q:h = 3 : 2 : 1, wobei jedoch gemäß der Erfindung 1 ∈ [2, 5, 3, 5], q ∈ [1, 5, 2, 5] und n ∈ [0,5, 1,5] gelten. Um gleichzeitig eine Vorstellung der Dimensionen für ein Kreuzfahrt-Luftschiff für 300 Personen zu geben, sind hier die Achslängen für das weiterhin benutzte Ausführungsbeispiel gegeben: 1 = 150 m, q = 100 m, h = 50 m.

Der Luftwiderstandsbeiwert c_{w} für allgemeine Ellipsoide (drei unterschiedliche Achslängen) ist in der Fachliteratur nicht zu finden. Dagegen sind für Rotationsellipsoide die Beiwerte c_{w} bei Anströmung in Richtung der Längsachse als Funktion des Verhältnisses Durchmesser/Länge bei S.F. Hoerner: "Aerodynamic Drag", 1958, Seite 2, als Figur 19 zu finden, wobei dieses Verhältnis von 0 bis 1,4, d.h. von extrem oblongen bis zu mäßig oblaten Ellipsoiden unter Einschluß der Kugel reicht. Die Messungen erfolgten bei großen Reynoldszahlen um 10⁶, wie sie auch bei Luftschiffen vorliegen. Diese Funktion ändert sich im Bereich, der hier vorliegt, nur schwach. Für die Ermittlung des richtigen c_{w}-Wertes kann man deshalb hier mit guter Näherung statt des Durchmessers des Rotationsellipsoids das geometrische Mittel aus Breite und Höhe, (QH)^{1/2} = D setzen, wenn der Frontalwiderstand berechnet werden soll. Ebenso ist für die Queranströmung (Seitenwindempfindlichkeit) (LH) ^{1/2} = D, für den Steig- oder Sinkwiderstand dagegen (LQ) ^{1/2} = D zu setzen.So entnimmt man aus dem angeführten Diagramm für den Frontalwiderstand einen Beiwert c_{w1} = 0,07, ebenfalls für den Seitenwiderstand c_{w2} = 0,07, für den vertikalen Widerstand c_{w3} = 0,10. Zum Vergleich gilt für den Frontalwiderstand des Zeppelins LZ 129 nach experimentellen Messungen c_{w4} = 0,06 (Achsenverhältnis 6:1), sowie für den Querwiderstand des Rumpfes c_{w5} = 0,07 und für die Leitwerks- und Ruderflächen c_{w6} = 1,1 (flaches Brett).

Nun gilt für den Luftwiderstand die Formel W = 1/2·ρ·v²·Fᵢ·c_{wi}, worin ρ die Dichte der Luft, Fᵢ und c_{wi} mit i = 1....6 die größten Querschnitte und die zugehörigen Beiwerte für die oben angegebenen Fälle sind.

Für den Fahrtwiderstand wurde beispielsweise eine Fahrtgeschwindigkeit von v = 100 km/h = 27,778 m/s, für die Seitenwindempfindlichkeit ebenso v = 100 km/h als Seitenwind angenommen. Für den Sink- oder Steigewiderstand wurde v = 1 m/s (kurz vor der Landung, bzw. kurz nach dem Start) angenommen. Die ermittelten Werte für die Widerstände sind in der Tabelle 1 zum Vergleich für LZ 129 und das hier als Beispiel beschriebene ellipsoide Luftschiff (EL 1) zusammen mit anderen Werten für beide Luftschiffe angegeben.

Aus den berechneten Widerständen für 100 km/h Fahrgeschwindigkeit ergeben sich sofort die für den Vortrieb bei dieser Geschwindigkeit benötigten Motorleistungen P₁₀₀ nach der Formel P₁₀₀ = W·v. Die tatsächlich installierte Leistung der Vortriebsmotoren des LZ 129 ergibt die ebenfalls als Meßwert ermittelte Höchstgeschwindigkeit bei voller Motorleistung von 137 km/h auch rechnerisch, wenn man P₁₀₀ mit dem Faktor (137/100)³ = 2,571 multipliziert (da die benötigte Motorleistung mit der dritten Potenz der Geschwindigkeit anwächst) mit einer Genauigkeit von etwa 1%. Für EL 1 ist die berechnete Höchstgeschwindigkeit für die angegenommene installierte Leistung 110 km/h, so daß bei der Reisegeschwindigkeit von 100 km/h nur 3/4 der installierten Motorleistung benötigt werden.

Die gewählte Ellipsoidform von EL 1 mit den Achsenverhältnissen 3:2:1 weicht relativ geringförmig von der Kugelform ab, was einerseits den Rauminhalt bei vorgegebener Oberfläche dem Optimum der Kugel stark annähert und andererseits die Seitenwindempfindlichkeit stark veringert, aber als Preis dafür eine erhöhte Vortriebsleistung benötigt. Das Verhältnis der installierten Vortriebsleistungen von EL 1 zu LZ 129 beträgt 1,81, ist also 80% höher als die von LZ 129, was auch gerade dem Prozentsatz entspricht, mit dem das Volumen von EL 1 das von LZ 129 übertrifft. Das ist aber bei der mit genügendem Abstand zur Höchstgeschwindigkeit gewählten Reisegeschwindigkeit von 100 km/h weniger von Bedeutung, da, wie leicht zu zeigen, die Motorbetriebskosten bei den gesamten Betriebskosten kaum ins Gewicht fallen.

Die Verringerung der Seitenwindempfindlichkeit des EL 1 gegenüber dem LZ 129 ist dagegen von größter Bedeutung, da viele Unglücke beim Betrieb der bisherigen Groß-Luftschiffe auf Seitenwindeinflüsse zurückzuführen sind. Wie in Tabelle 1 aufgelistet, ist der Widerstand des EL 1 gegenüber einem Sturm von 100 km/h nur 1/3 von LZ 129, was nicht zuletzt auf den Verzicht auf die havarie-anfälligen Leit- und Ruderflächen zurückzuführen ist. Diese Flächen wurden bei Zeppelinen gelegentlich im Sturm zerrissen und mußten während der Fahrt unter Lebensgefahr für die Besatzung repariert werden. Diese Änderung bedeutet einen unschätzbaren Vorteil für die Sicherheit des Luftschiffs, die bei einem Kreuzfahrt-Luftschiff höchste Priorität besitzt. Der Widerstand beim Sinken und Steigen ist für LZ 129 und für EL 1 bis auf wenige Prozente gleich.

Bei höheren Fahrgeschwindigkeiten (etwa der zweckmäßigsten Reisegeschwindigkeit eines Kreuzfahrt-Luftschiffs von rund 100 km/h) erfordern die von den Aktuatoren auszuregelnden Böen und anderen aerodynamischen Störungen eine nicht unerhebliche installierte Aktuatorleistungen. Leitwerke (ohne Ruder!) würden eine Eigenstabilität um die drei Hauptachsen erreichen, so daß benötigten Aktuatorleistungen erheblich herabsetzbar wären. Andererseits würde bei kleinen Geschwindigkeiten dadurch wieder die verstärkte Seitenwindempfindlichkeit auftreten, die den Anlaß zum Verzicht auf die Leitwerke und Ruder gegeben hatte.

Ein weiteres Merkmal besteht nun darin, ausfahrbare Leitwerke F zu benutzen, die bei Bedarf bei höheren Geschwindigkeiten ganz oder teilweise ausgefahren werden, während sie normalerweise so in das Innere des Ellipsoids eingezogen sind, daß sie nicht oder nur ganz unwesentlich aus der Hülle des Luftschiffs herausragen. Die Dimensionierung würde dann beim Entwurf eines Luftschiffs so durchzuführen sein, daß die Flächen so groß sind, daß bei der gewünschten Fahrgeschwindigkeit eine ausreichende, die Aktuatoren unterstützende Eigenstabilität erzielt wird, ohne die Flächen zu sehr zu vergrößern und damit die Seitenwindempfindlichkeit unnötig zu erhöhen. Solche im Fluge veränderlich ausfahrbaren Flächen sind aus dem Flugzeugbau im Prinzip bekannt, z.B. bei der Änderung der Tragflügel-Pfeilung oder der Nasenabsenkung von Überschallflugzeugen, so daß eine genauere Beschreibung der dazu benötigten Mechanismen hier überflüssig ist und erst bei einer Durchkonstruktion auf bewährte Vorbilder zurückgegriffen werden kann. Es ist möglich drei, vier oder mehr Leitflächen zu benutzen.

Eine weitere Verringerung von aerodynamischen Instabilitäten durch wandernde Ablösepunkte der Strömung auf dem hinteren Drittel der Oberfläche des Schiffs kann durch aufgesetzte kleine Finnen senkrecht zur Oberfläche und in regelmäßigen Abständen von ein bis zwei Metern erreicht werden. Solche ungefähr dreieckigen Finnen, die an der Basis etwa 50 cm, in der Höhe etwa 25 cm lang sind, werden im Flugzeugbau bei Großflugzeugen verwendet. In Fig. 1 ist eine Leitflosse F im ausgefahrenen (durchgezogene Linie) und im eingezogenen (gestrichelt) Zustand am Schiffskörper S illustriert.

Durch tiefliegende Anordnung von Maschinen, Betriebsstoffen, Vorräten etc. und deren gleichmäßige Gewichtsverteilung ergibt sich die Möglichkeit, den Schwerpunkt des Luftschiffs tief auf der unteren Hälfte der Hochachse zu positionieren, so daß sich eine gewisse Eigenstabilität um die Normallage ergibt. Auslenkungen durch Windkräfte, Personen- und Lastverlagerungen und dergleichen werden durch sechs Aktuatoren dynamisch ausgeglichen, die außerdem für gewollte Fluglageänderungen, wie Steig-, Sink- oder Kurvenflug benötigt werden. Die Aktuatoren sind vorzugsweise elektrisch betriebene umsteuer- und geschwindigkeitsregelbare Gebläse (Leistung rd. 30 bis 150 kW), die jeweils nahe dem Ende der Längs- und Querachse angeordnet sind. Vier Aktuatoren an den Enden der Längs- wie der Querachse sind je in einem in vertikaler Richtung durch das ganze Luftschiff von oben bis unten durchgehenden Rohr angeordnet. Dadurch kann je nach Laufrichtung des Gebläses an seinem Ort ein Auf- oder Abtrieb erzeugt werden, um so z.B. bei umgekehrter Laufrichtung an den entgegengesetzten Achsenenden eine Kippung oder bei gleicher Richtung einen bei gleichbeibender Normallage wirkenden Auftrieb oder Abtrieb zum Steigen oder Sinken des Luftschiffs zu erzeugen. Für die Umlenkungen des Luftschiffs um die Hochachse (Kurvenfahrt) sind im wesentlichen die auf den beiden Seiten des Luftschiffs in konventioneller Weise in Gondeln angeordneten Vortriebsmotoren mit Propellern einzusetzen, indem beispielsweise die auf der linken Seite angeordneten Propeller schnell, auf der rechten Seite langsam laufen, um eine Rechtskurve zu fliegen, wobei selbstverständlich die an den Enden der Querachse angeordneten Aktuatoren eine zu Kurvenradius und Fahrgeschwindigkeit passende Schräglage automatisch oder von Hand einstellen. Sollte sich bei der praktischen Erprobung ergeben, daß so keine ausreichend engen Kurven gefahren werden können, so kann auch in der Nähe des vorderen und hinteren Aktuators je ein weiterer gleichartiger Aktuator in Form eines in horizontaler Richtung durch das Luftschiff laufenden Rohres mit Gebläse angeordnet werden.

Die Höhe der Aktuatoren sollte vorzugsweise soweit wie möglich nahe der Höhe des Schwerpunktes liegen, gleichzeitig aber zur Verbesserung der Hebelwirkung möglichst nahe den Enden der Längsachse, also ein Kompromiß, der dem Einzelentwurf angepaßt werden muß. Die Lage von sechs Aktuatoren A ist schematisch mit Rohrform entsprechend der Wirkungsrichtung in Fig. 2a in Draufsicht, in Fig. 2b in Seitenansicht und in Fig. 2c in Frontalansicht dargestellt. Die Zahl der horizontal bzw. vertikal wirkenden oder auch weiterer schräg wirkenden Aktuatoren kann an die jeweilige Bauform angepaßt sein.

Für die Dimensionierung der Aktuatoren A kann man nach Literaturangaben von einem spezifischen Schub eines einzelnen Aktuators (meist mit den englischen Ausdrücken "ducted fan" oder "impeller" bezeichnet) von mindestens 30 N/kW (entsprechend rund 3kg Auftrieb) ausgehen. Damit ergibt sich als sinnvolle Lösung, jeden der sechs Aktuatoren mit beispielsweise 33 kW Leistung auszustatten. So können die vier vertikal wirkenden Aktuatoren bei Start (Landung) einen Auftrieb (Abtrieb) von zusammen 400 kg bewirken, was für eine Steig-(Sink-) Geschwindigkeit von 2,4 m/s ausreicht. Natürlich ergibt sich diese Geschwindigkeit wegen der großen trägen Masse des Luftschiffs erst nach einiger Zeit, wenn der Luftwiderstand des Luftschiffs z.B. beim Aufstieg mit steigender Geschwindigkeit dem Auftrieb des Luftschiffs durch die 4 Aktuatoren gerade das Gleichgewicht hält. Um eine Anschauung für die Dauer dieser Steigphase zu geben, sei hier eine kurze Tabelle mit dem Start bei t = 0 angegeben, wo hinter der Zeit t (in s) jeweils die erreichte Höhe h (in m) und Geschwindigkeit v (in m/s) ohne Berücksichtigung des Luftwiderstands gegeben, da der für die Anfangsphase des Aufstiegs zunächst vernachlässigbar bzw. geringfügig ist: 0/0/0; 10/0,67/0,133; 60/24/0,8; 180/216/2,4. Das Luftschiff hat also nach etwa 5 min seine stationäre, durch den Luftwiderstand bestimmte konstante Steiggeschwindigkeit erreicht.

Entsprechend träge reagiert das Luftschiff auf die gegenläufigen horizontal laufenden Aktuatoren, wenn eine Drehbewegung erzeugt werden soll. Für eine überschlägige Berechnung wurde das Trägheitsmoment J des Luftschiffs um die Hochachse als das einer gleichmäßig mit einer Masse M = 300000 kg belegten Kreisscheibe mit dem Radius R berechnet, wobei R² = a·b genommen wird, zu J = 1/2 · M · R² . Das durch die Aktuatoren erzeugte Drehmoment T ergibt sich für einen horizontalen Abstand der Aktuatoren von 60 m zu T = 2 · 1000 N · 60 m. Dann ergibt sich die zeitliche Ableitung der Winkelgeschwindigkeit ω aus T = J · dω/dt. Die errechneten Werte ergeben dann den Drehwinkel (in Klammern dahinter den von der Bug- bzw. Heckspitze zurückgelegten Bogenweg. Nach 10 s: 0,6° (0,8 m), nach 1 min: 21° (28,8 m).

Diese Angaben mögen genügen, da sich nach dem angegebenen Vorgehen leicht andere Fälle, wie seitliche Translation bei gleichgerichteten horizontalen Aktuatoren oder die Kombination von statischem und dynamischen Auftrieb durch Aktuatoren in ausreichender Näherung berechnen lassen. Auf jeden Fall zeigt sich, daß die für die Aktuatoren beispielhaft angegebenen Dimensionierungen für alle normalen Start-, Fahrt- und Landevorgänge ausreichend sind und wie sie abgeändert werden können, um andere gewünschte dynamische Eigenschaften des Luftschiffs zu erzielen.

Ein besonderer Vorzug dieser dynamischen Steuerung ist die Tatsache, daß sie im wesentlichen geschwindigkeitsunabhängig wirkt, im Gegensatz zur konventionellen Steuerung durch Leitwerke mit Rudern, die bei Fahrtgeschwindigkeit null völlig unwirksam wird. Diese Eigenschaft der Aktuatoren hilft nicht nur, eine Unfallquelle zu vermeiden, die in der Geschichte der Luftfahrt eine unheilvolle Rolle gespielt hat, sondern ermöglicht auch die Präzisionslandungen, die für den Einsatz der weiter unten beschriebenen Ankervorrichtung besonders vorteilhaft ist.

Das Volumen des Luftschiffs EL 1 ergibt sich aus der Formel V = (4/3) · π · a · b · c, wobei a = 1/2, b = q/2 und c = h/2 die Längen der Halbachsen sind. Es ergibt sich laut Tabelle 1 zu 80% größer als das von LZ 129, obwohl die Länge von EL 1 nur 61% der von LZ 129 gleichkommt, was sich auf die Manövrierfähigkeit besonders bei Präzisionslandungen sehr günstig auswirkt.

Die obere Hälfte des Luftschiffs EL 1 (Volumen 196.350 m³ -- mehr als das gesamte Traggasvolumen von LZ 129) ist im wesentlichen ganz mit permanent gefüllten und versiegelten Traggaszellen gefüllt, die beim Start soweit gefüllt sind, daß sie erst bei der gewünschten Reisehöhe (z.B. 2500 m) prall mit Helium gefüllt sind (sogenannte Prallhöhe). Diese Gaszellen müssen aus so widerstandsfähigem Material gefertigt sein, daß sie auch noch bei etwa 500 m größerer Höhe nicht platzen, sondern erst bei noch größerer Höhe die Sicherheits-Überdruckventile ansprechen und Gas ablassen, was aber bei umsichtiger Reiseführung niemals nötig sein sollte.

Das vierte Sechstel der Höhe des Luftschiffs, von oben gerechnet, wird von zwei übereinander angeordneten Passagierdecks eingenommen, während im darunter liegenden Teil des Luftschiffs, soweit nicht durch Maschinen, Laufgänge, Aufzüge, Vorräte etc. eingenommen, weitere Gaszellen angeordnet sind, die allerdings im Gegensatz zu den oben liegenden Gaszellen an eine Helium-Temperierungseinrichtung angeschlossen sind, die, wie weiter unten beschrieben, eine Auftriebsregelung während der Fahrt ermöglicht. Das maximale Fassungsvermögen dieser Gaszellen beträgt rund 80.000 m³, so daß das Gesamtfassungsvermögen für Helium 275.000 m³ beträgt, was einen Gesamtauftrieb von 300 t ergibt. Durch die weiter unten beschriebene Helium-Temperierungseinrichtung kann dieser Auftrieb ganz nach Bedarf reduziert werden.

Eine weitere Verbesserung des Kreuzfahrt-Luftschiffs besteht darin, daß die Traggaszellen, die in der unteren Hälfte des Schiffs unterhalb des untersten Decks angeordnet sind, mit ihrem Auftrieb in die Berechnung der Statik des Kreuzfahrt-Luftschiffs einbezogen werden. Indem die gefüllten oder auch nur teilgefüllten Gaszellen so ausgebildet werden, daß ihre obere Begrenzung eine ebene Folie ist, die einem bestimmten Flächenbereich der ebenen und glatten Unterseite des untersten Decks anliegt, so ergibt sich eine gleichmäßig über die Gesamtfläche verteilte Stützkraft, die das Gewicht der Decks aufnehmen und noch übertreffen kann. Dadurch kann die Statikberechnung des Schiffs erheblich vereinfacht und das Gerippegewicht erleichtert werden.

Die der Kugelgestalt nähere Form des EL 1 im Vergleich zum ZL 129 ergibt eine wesentlich günstigere Statik und wird im Verein mit der Verwendung neuerer Materialien wie CFK u. Kunststoffen erheblich das Nutzlast/Eigengewicht-Verhältnis verbessern und in die Gegend von 1,2 treiben können. Dadurch ist es auch möglich, das Luftschiff mit einer Metall-Außenhaut zu versehen, deren Gewicht (Belag z.B. 1/4 mm Duraluminium oder eine vergleichbar geeignete Legierung) zu etwa 20 t abgeschätzt wurde. Dadurch werden u.a. auch die starken Abtriebskräfte vermieden, wenn starke Regenfälle tuchbespannte Zeppeline eine oder mehrere Tonnen Regenwasser aufnehmen ließen. Bei geeigneter Befestigungsweise ist es durchaus auch unter Umständen vorteilhaft, die Außenhaut oder Ummantelung als tragendes Element in die Statik mit einzubeziehen und gegebenenfalls dicker und aus statisch leistungsfähigerem Material, z.B. Blechen aus Titan oder Titan-Aluminium-Legierungen zu gestalten.

Über die ganze Ausdehnung der Passagierdecks wird statt Blech eine großflächige Verglasung aus einem extrem widerstandsfähigem organischen Glas, z.B. Lexan (reg. Marke), verwendet das von ausreichender Dicke und an genügend vielen Stellen am Gerippe verankert ist, um allen Belastungen standzuhalten. So ergeben sich großflächige Panoramafenster, die eine ungestörte Beobachtung des überflogenen Gebiets ermöglichen, was erheblich zu der Attraktivität einer Luft-Kreuzfahrt beiträgt.

Die beiden Passagierdecks sind beispielsweise so aufgeteilt, daß das untere Deck (Raumhöhe z.B. 4,5 m) für allgemein benutzte Einrichtungen (Speisesäle mit Küchen, allgemeine Salons, Spielsalons, Bars, Coffee-Shop etc.), das obere Deck (Raumhöhe z.B. 2,8 m) für die Kabinen und Suiten der Passagiere benutzt wird. Das untere Deck enthält auch noch einen oder mehrere Räume für die Schiffsführung direkt an der vordersten Stelle des Bugs. Die Besatzung des Luftschiffs, Offiziere und Personal, sind jeweils in Kabinen untergebracht, die so nahe wie möglich an ihrem Arbeitsplatz angeordnet sind, wobei , falls gewünscht, diese aber auch in einerm weiteren, tiefer gelegenen Deck separat von den Passagieren untergebracht werden können. Die Aufteilung der Passagierkabinen sollte vorzugsweise so erfolgen, wie es bei modernen Kreuzfahrtschiffen üblich ist, nämlich beispielsweise bei 300 Passagieren 150 Kabinen, wovon 2/3 (100 Kabinen) als Außenkabinen, 1/3 (50 Kabinen) als Innenkabinen ausgebildet sind. Von den Außenkabinen sollten etwa 10 als große Luxus-Suiten ausgestattet sein. Das obere Deck hat eine Fläche von rund 11.000 m², das untere 10.000 m², so daß pro Passagierkabine im Mittel rund 60 m² zur Verfügung stehen. Die Besatzung sollte etwa 70 Personen umfassen (12 Schiffsführung und Technik, 23 Kabinenservice, 25 allgemeiner Service (Köche, Kellner etc.), 10 Unterhaltungsservice (Animatöre, Spielsalon-Personal)).

Das Luftschiff kann für eine Höchstgeschwindigkeit von etwa 110 km/h und eine Reisegeschwindigkeit von 100 km/h ausgelegt sein, wobei vorzugsweise 4 Vortriebsmotoren mit Schubpropeller und einer Gesamtleistung von 4800 kW verwendet werden.

### 2. Fahren ohne Ballast und Gasverlust

Eine besondere Gestaltung eines erfindungsgemäßen Luftschiffs bezieht sich darauf, daß die Verwendung einer großen Helium-Verflüssigungsanlage nicht zum Zwecke der Gewichtsverlust-Kompensation des Treibstoffverbrauchs vorgesehen ist und auch die neuen Luftschiffe eine Verbrennungswasserrückgewinnungsanlage erhalten.

Es wird eine Helium-Verflüssigungsanlage mit einer Verflüssigungsleistung von etwa 200 bis 500 l/h benutzt, die einen Vorratstank von mindestens 10 m³ flüssigen Heliums besitzt, der bei normaler Fahrt immer etwa zur Hälfte gefüllt sein sollte und überdies zur schnellen Verdampfung des Heliums mit einem Wärmespeicher in Form eines heißwassergefüllten Kühlers von mindestens einem halben Kubikmeter Heißwasser Inhalt verbunden ist, so daß bei Bedarf für mehr Auftrieb schnell flüssiges Helium über den Wärmespeicher verdampft und in die verbundenen Gaszellen gefüllt werden kann, während bei Bedarf für mehr Abtrieb durch die Helium-Verflüssigungsanlage weiter Helium verflüssigt wird, wobei der Leistungsbedarf der Anlage von etwa 200 bis 500 kW, je nach Größe der Anlage, auch durch Ankopplung an einen oder mehrere der Vortriebsmotoren gedeckt werden kann.

Es ist eine vergleichsweise kleine Helium-Verflüssigungsanlage von etwa 200 l/h bis etwa 500 l/h vorgesehen, die sehr wertvoll beim Fahren ist, wenn bei leichten Fall- oder Aufwinden, Überwindung von Gebirgshöhen oder beim Durchfahren von Gegenden mit starken Schwankungen der atmosphärischen Temperatur kein Ballast abgeworfen oder Gas abgelassen werden muß, aber ebenso auch als Lande- oder Starthilfe.

Selbst die kleinere Anlage von 200 l/h kann während der letzten fünf Stunden vor einer Landung z.B. einen Vorrat von 1 m³ flüssigen Heliums erzeugen, der während der Landung nützlich ist und zum Start bei seiner Verdampfung fast 1 t Auftrieb ergibt. Dazu muß mit Pumpen das flüssige Helium durch einen mit flüssigem Stickstoff "vorgeheizten" Verdampfungsraum geleitet werden, und anschließend durch einen nach Art eines Kühlers gebauten Wärmespeicher fließen, in dem z.B. auf 95° aufgeheiztes Wasser beim Durchströmen des kalten Heliums bis auf 20° abgekühlt wird. Dabei sind die erforderlichen 55 kWh einem Wärmespeicherinhalt von nur einem halben m³ Wasser zu entnehmen, der in 5,5 h mit einem elektrischem Heizer von 10 kW wieder voll aufgeladen werden kann. Da 1 t rein statischen Auftriebs beim Start eine zusätzliche Steiggeschwindigkeit von 3,8 m/s ergibt (Tabelle 1), die in 1 min einen Höhengewinn von über 200 m Höhe ermöglicht, ist somit ein Senkrechstart möglich.

Ähnlich bewirkt ein entsprechend großer Abtrieb bei der Landung eine hohe senkrechte Sinkgeschwindigkeit, die kurz vor der Landung durch die vier vertikal wirkenden Aktuatoren und kontinuierliches schnelles Verdampfen von flüssigem Helium bis auf null abgebremst werden kann.

Selbstverständlich ist eine solche Helium-Verflüssigungsanlage auch während der Fahrt wegen ihres geringen Leistungsbedarfs von etwa 200 kW (500 kW bei der erwähnten größeren Anlage) durch Ankopplung an ein Vortriebsmotorenpaar zu betreiben. Eine vorausschauende Schiffsführung wird die topographischen und meteorologischen Gegebenheiten der nächsten 2 bis 3 Stunden zur Planung des Betriebs der Helium-Verflüssigungsanlage nutzen, um jederzeit den erforderlichen zusätzlichen Auftrieb oder Abtrieb zur Verfügung zu haben, da naturgemäß umso eher vorausgeplant werden muß, je kleiner die Anlage dimensioniert ist. Deshalb ist für kurzfristiger zu fällende Entscheidungen eine größere Anlage von etwa 500 l/h günstiger. Außerdem ist auf jeden Fall ein Vorratsgefäß von mindestens 10 cbm flüssigen Heliums vorzusehen, das bei normaler Fahrt zur Hälfte gefüllt sein sollte, um eine ausreichende Auf- oder Abtriebsreserve bereitzustellen.

Es soll nicht verhehlt werden, daß für das plötzliche Auftreten von erheblichen vertikalen Turbulenzen es immer noch nötig sein wird, einen Notballast für Schnellabwurf bereitzuhalten (bei LZ 129 waren dies 4 t Wasser) und auch notfalls bereit zu sein eine (möglichst kleine) Gasmenge durch eng begrenztes Abblasen zu opfern, falls nicht schnell genug eine ausreichende Menge Helium verflüssigt werden kann, was umso eher nötig sein wird, je kleiner die Helium-Verflüssigungsanlage ist. Ist jedoch das Turbulenzgebiet durchfahren, kann der evtl. zu starke Höhenverlust wieder durch Verdampfen von Helium kompensiert werden.

Es wird vorgeschlagen, statt der Verflüssigung/Wiederverdampfung eines relativ kleinen Heliumvolumens die Abkühlung/Aufheizung eines entsprechend sehr viel größeren Volumens um relativ kleine Temperaturdifferenzen auszunutzen. Versuche dieser Art wurden bereits frühzeitig unternommen, insbesondere um einem beim Start zu schwerem Schiff eine größere Tragkraft zu geben, indem man die gesamte Luftschiffhalle mit dem Schiff einige Stunden vor dem Start um einige Grade aufheizte. Diese Versuche wurden jedoch aus verschiedenen Gründen bald wieder aufgegeben, während Versuche zur Abkühlung oder Aufheizung eines Teils des Traggases, womöglich sogar während der Fahrt, nicht bekannt geworden sind. Diese Aussagen beziehen sich nur auf Starrluftschiffe, während ja kleinere Ballons und Pralluftschiffe (Blimps) sogar mit Gasbrennern aufgeheizte Luft als Traggas benutzen.

Eine neue Lösung dieses Problems besteht nun darin, einen Teil des Traggases in mehreren mit einer wärmeisolierenden Schaumstofffolie laminierten Gaszellen, die durch heliumdichte Leitungen ausreichenden Querschnitts verbunden sind, über ein Gebläse mit einem Durchflußwärmeaustauscher zu verbinden, der seinerseits mit einem Kälteaggregat verbunden ist, das von Kühl- auf Heizbetrieb (als Wärmepumpe) umgeschaltet werden kann.

Als Beispiel sei angenommen, daß das Volumen des in den wärmeisolierten Zellen eingeschlossenen Heliums 100.000 m³ betrage und zum Start von 15°C (288 K) um 10° aufgeheizt werden soll. Dann vergrößert sich das Volumen bei konstantem Druck um den Faktor 1,0374 und erzeugt bei 1013 mbar Luftdruck einen Auftrieb von 3,64 t. Fährt umgekehrt das Luftschiff in 2.000 m Höhe (2°C und 795 mbar) und wird um 10°C abgekühlt, so entsteht ein Abtrieb von 3,14 t.

Zur Abkühlung des Gases ist ihm eine Wärmemenge von 835 MJ zu entziehen. Wird dies in der akzeptablen Zeit von einer Stunde erreicht, so muß das Kälteaggregat eine Kälteleistung von 232 kW erbringen. Dem entspricht nach einer allgemeinen Dimensionierungsregel, daß die Anschlußleistung des Aggregats ein Drittel der Kälteleistung betragen sollte, hier einer elektrischen Anschlußleistung von rund 80 kW. Das Gewicht dieser Helium-Temperiereinrichtung beträgt mit etwa 2t weniger als ein Zehntel der alternativen Helium-Verflüssigungsanlage. Die elektrische Anschlußleistung der Anlage kann der zentralen Stromversorgung des Luftschiffs entnommen werden. Bei Anschluß an den Kühlwasserkreislauf des Luftschiffs erzeugt die abzutransportierende/aufzunehmende Wärmemenge des Aggregats bei einem Durchfluß von 10 m³/h nur eine Temperaturänderung von etwa 20°, die keinen signifikanten Einfluß auf die Temperierung des Heliums hat.

### 3. Landen und Verankern des Luftschiffs

Hier wird im folgenden ein neues Verfahren für das Landen und Verankern von erfindungsgemäßen, großen Starr-Luftschiffen angegeben und die nötigen Einrichtungen dazu in verschiedenen beispielhaften Ausführungsformen beschrieben, bei denen die oben geschilderten Schwierigkeiten völlig vermieden werden und einen Passagiertransport im großen Maßstab überhaupt erst ermöglichen

Eine besondere Gestaltung der Erfindung ist im wesentlichen dadurch gekennzeichnet, daß das Luftschiff auf einer ausreichend großen und dicken auf dem Erdboden aufliegenden oder mit ihm verbundenen Eisenplatte landet und durch zwei oder mehr mit dem Luftschiff fest verbundenen Elektromagnete vermittels Einschalten des Stroms für die Magnete kraftschlüssig mit dem Grund verbunden wird. In den weiter unten folgenden beispielhaften technischen Ausführungen der für dieses Verfahren notwendigen Einrichtungen wird in quantitativen Abschätzungen gezeigt werden, daß sich das Verfahren tatsächlich und auch wirtschaftlich vorteilhaft durchführen läßt. Die wesentlichste Voraussetzung hierfür ist, daß die Abreißkräfte der Magnete so hoch sind, daß auch die stärksten zu erwartenden Windböen auf die wegen der großen Fläche besonders empfindlichen Breitseite kein Abreißen der Magnete von der Grundplatte bewirken können. überdies muß auch die Lastverminderung z.B. durch das Aussteigen von Passagieren (bei 300 Passagieren von je 80 kg mit 20 kg Gepäck sind das 30 t Gewichtsverminderung = Auftrieb) durch die Haltekräfte der Magnete kompensiert werden.

Das Landeverfahren ist dann so durchzuführen, daß das Luftschiff sich senkrecht über der Landeplattform schwebend unter der Wirkung der Aktuatoren dem Boden bis auf etwa 1 m nähert, wo dann durch die Erhöhung des Stroms durch die Magnete eine beschleunigte Annäherung an die Bodenplatte erfolgt, aber eine Reihe von Stoßdämpfern mit progressiver Charakteristik, die um die Magnete herum angeordnet sind, ein weiches Aufsetzen garantieren, um die Struktur des Luftschiffs keinen übermäßigen Belastungen auszusetzen und den Passagieren und Mannschaften keine Unpäßlichkeiten zuzumuten. Diese Stoßdämpfer werden zur Landung ausgefahren und sind während der Fahrt eingezogen.

Eine Vorrichtung besteht aus den Magneten im Luftschiff und der Verankerungsplatte. Um eine ebene Fläche zu haben, auf der das Luftschiff bei der Landung aufsitzen kann, weicht die Oberfläche des EL 1 im untersten Bereich seiner Oberfläche etwas von der vollkommenen Ellipsoidform ab, indem parallel zur Mittelebene eine ebene elliptische Fläche (Abplattung) mit einer großen Halbachse von etwa 12 m entsteht. Am vorderen und hinteren Ende dieser Fläche werden die beiden Magnete so eingebaut, daß deren magnetisch aktive Oberfläche genau bündig mit der eben beschriebenen Landefläche des EL 1 abschließt, so daß keinerlei zusätzlicher Luftwiderstand entsteht. Bei diesen Magneten handelt es sich um Topfmagnete, die kommerziell als sogenannte Lasthebemagnete gefertigt sind. Die dazu weiterhin gemachten Angaben sind dem Katalog der Firma Wagner KG Magnetbau, 87751 Heimertingen, entnommen. So können z.B. zwei Magnete eingebaut werden, die bei 1,35 m Durchmesser und 28 cm Höhe bei 1650 kg Eigengewicht selbst bei einem Luftspalt von 4,5 mm zwischen aktiver Magnetebene und Verankerungsplatte eine Abreißkraft von 300 kN (entsprechend etwa 30 t Gewicht) aufweisen. Die dafür aufgenommene Erregerleistung beträgt bei Speisung mit 220 V= gerade 8,8 kW. Bei dem oben erwähnten Aussteigen von 300 Passagieren entsteht ein Auftrieb von etwa 300kN, während eine Seitenwindbö von 100 km/h Geschwindigkeit gerade 192 kN Seitendruck ergibt (Tabelle 1). Damit sind diese beiden Magnete vollkommen ausreichend zur magnetischen Verankerung des EL 1 an der Verankerungsplatte.

Die Benutzung von mindestens zwei Magneten dieser Dimensionierung hat mehrere Vorteile. Wenn die elektrische Kontroll- und Speisevorrichtung für jeden Magneten getrennt aufgebaut ist, kann beim Ausfall oder Teilausfall eines Magneten doch mit hoher Wahrscheinlichkeit noch der normale Betrieb bis zur Beendigung einer allfälligen Reparatur der Einrichtung gesichert werden. Nach dem allgemeinen Redundanzprinzip zur Erhöhung der Betriebssicherheit technischer Einrichtungen wäre diese Funktion noch besser durch die Verwendung von drei kleineren Magneten mit gleicher Leistungssumme zu erreichen, wie gleich noch ausgeführt wird.

Diese Anordnung mit mindestens zwei Magneten im Abstand von etwa 20 m ermöglicht auch das Aus- und Einsteigen von Passagieren mit Herzschrittmachern und solchen, die magnetisch empfindliche Geräte wie Notebooks oder Kassettenrecorder mit sich führen, ohne Gefahr von Personen- oder Sachschäden, wenn die Aussteigöffnung in der Mitte zwischen den Magneten außerhalb von deren Streufeldbereich angeordnet wird.

Eine besonders vorteilhafte Ausführung benutzt drei kleinere Magnete mit dem bereits oben erwähnten Sicherheitszuwachs gegenüber zwei Magneten. Ein weiterer Vorteil besteht in der Verringerung des, wenn auch geringen Risikos durch das bei einer heftigen Seitenbö entstehende Kippmoment, da dieses ja auf der ganzen Seitenfläche entsteht, weil bei sinnvoller Anordnung der Magnete dieses Moment voll aufgenommen werden kann. Eine solche Anordnung ist zweckmäßigerweise so ausgeführt, daß ein Magnet am hinteren Ende der Landefläche des Luftschiffs (wie bei der Zwei-Magneten-Anordnung) positioniert wird, während die beiden anderen Magnete jeweils im gleichen Abstand rechts und links von der Mittellinie am Rande der Landefläche und ungefähr 3 m hinter deren vorderem Ende positioniert werden. Für diese Anordnung wären aus dem Katalog der oben erwähnten Firma die mit einem Durchmesser von 1,000 m und einer Abreißkraft von 192 kN bei 3 mm Luftspalt und 700 kg Eigengewicht vorzusehen. Dadurch ergibt sich ein weiterer Vorteil dadurch, daß die Dicke der Verankerungsplatte wesentlich geringer sein kann. Als optimale Dicke ist etwa ein Zwölftel des Durchmessers der Magnete anzusehen, so daß auf diese Weise 1/4 des Eisengewichts der Verankerungsplatte im Vergleich zur Anordnung mit zwei Magneten eingespart würde. Alternativ kann man diese Argumentation auf eine größere Zahl von Magneten ausdehnen. Die Optimierungsaufgabe kann nur im konkreten Einzelfall bei vorliegendem Pflichtenheft nach dem hier angegebenen Vorgehen gelöst werden. So kann außerdem die Verwendung von mehreren kleineren Magneten die statische Aufgabe der ausreichenden Befestigung der Magnete im Gerippe des Luftschiffs erheblich erleichtern. Diese Aufgaben können in vielfältiger Art durchgeführt werden, ohne das hier abgesteckte Gebiet der Erfindung zu verlassen.

Als Verankerungsplatte genügt eine aus Teilen vor Ort zusammengesetzte und zweckmäßigerweise einbetonierte kreisförmige ebene Platte aus kohlenstoffarmem Stahl (z.B. St 34 oder St 37) mit der oben angegebenen Dicke in Abhängigkeit vom Magnetdurchmesser und mit einem Durchmesser von ungefähr 30 m. Dieser Durchmesser garantiert bei einem äußersten Abstand der Magnete von dem Mittelpunkt der Landefläche des Luftschiffs eine ausreichende Rangierfreiheit von ungefähr 5 m nach allen Richtungen, was eine ohne weiteres zu erreichende Präzision der Landung nach dem oben angegebenen Verfahren bedeutet. Die Oberfläche wird zweckmäßigerweise mit beispielsweise Tagesleuchtfarbe gestrichen, um die Ortung und Landung visuell zu unterstützen, obwohl das wohl im Normalfall wegen des Einsatzes von Radarsensoren nicht nötig sein dürfte.

Statt die Verankerungsplatte auf festen Boden zu legen, ist es selbstverständlich auch möglich, sie verankerten und miteinander verbundenen Pontons aufzulegen. Die so entstehende Plattform kann längs eines Hafenkais verankert werden und z.B. das leichte Umsteigen von Passagieren zwischen Kreuzfahrt-Luftschiff und Kreuzfahrtschiff zu gestatten.

Die Vorteile des Verfahrens unter Ausnutzung der besonderen Eigenschaften der beschriebenen Vorrichtung zur Durchführung des Verfahrens sind offensichtlich. Vor allem entfallen alle aufwendigen Installationen am Landeplatz bis auf eine einfache Verankerungsplatte, sowie jegliches Bodenpersonal, so daß auch völlig abgelegene Punkte auf dem größten Teil der Erdoberfläche zur Landung benutzt werden können. Dadurch wird die Wirtschaftlichkeit eines Luftschiffbetriebs ganz außerordentlich erhöht, zum anderen wird die Sicherheit der Verankerung durch die kraftschlüssige Verbindung zwischen Luftschiff und Verankerungsplatte gegenüber den bisherigen, oben geschilderten Verfahren erheblich erhöht, da die für jedes Luftschiff leicht angebbare Haltekraft gegen Auftriebsänderungen und Winddruck mit einem ausreichenden Sicherheitsfaktor elektromagnetisch eingehalten werden können.

Normalerweise wird ein Kreuzfahrt-Luftschiff durch die beschriebene elektromagnetische Verankerungseinrichtung auf einer entsprechend dimensionierten Eisenplatte landen. In ganz außergewöhnlichen Fällen kann jedoch das Kreuzfahrt-Luftschiff auch zur Notlandung auf einem freien Gelände gezwungen sein, wo die Eisenplatte fehlt. Auch in dieser Situation sollte eine Einrichtung vorhanden sein, die in der Mehrzahl der Fälle eine sichere Verankerung und damit das ungefährdete Aussteigen der Passagiere gewährleistet.

Es ist nun ein wichtiger Aspekt, dies durch zwei oder mehr etwa fünf Meter lange Erdbohrer zu gewährleisten, die auf der Aussteigeebene in der Nähe der Elektromagnete so fest montiert sind, daß sie sich durch eine Öffnung im Fußboden der Aussteigeebene senkrecht nach unten ins Erdreich bohren können, bis eine ausreichende Haltekraft erzielt ist. Dies kann durch eine entsprechende Ausformung der Bohrspirale und genügend großen Durchmesser derselben erleichtert werden. Normalerweise werden diese Bohrer durch Elektromotoren angetrieben, doch sollte für den Fall, daß die Stromversorgung ausgefallen ist, noch an jedem Bohrer eine stark untersetzte Kurbelvorrichtung vorhanden sein, an der mindestens zwei Mann gleichzeitig arbeiten können.

**Tabelle 1**

| Vergleich LZ 129 mit EL 1 | | | | |
|---|---|---|---|---|
| Eigenschaft | bei | LZ 129 | EL 1 | Faktor |
| | | | | EL1/LZ 129 |
| Länge | | 245 m | 150 m | 0,61 |
| Breite | | 41,2 m | 100 m | 2,43 |
| Höhe | | 41,2 m | 50 m | 1,21 |
| Volumen * | | 217.750 cbm | 392.700 cbm | 1,80 |
| Frontalwiderst. | 100 km/h | 37.187 N | 127.795 N | 3,44 |
| Seitenwiderst. | 100 km/h | 583.525 N | 191.694 N | 0,33 |
| Sinkwiderstand | 1 m/s | 756 N | 710 N | 0,94 |
| Sinkgeschwind. | 10 kN Abtrieb | 3,6 m/s | 3,8 m/s | 1,06 |
| nöt. Motorleist. | 100 km/h | 1.033 kW | 3.550 kW | 3,44 |
| inst. Motorleist. | | 2.650 kW | 4.800 kW | 1,81 |
| Höchstgeschw. | | 137 km/h | 110 km/h | 0,80 |
| Vol. Gaszellen | | 190.000 cbm | 275.000 cbm | 1,45 |
| Nutzlast | | 96 t | >138 t | >1,44 |
| zahlende Last | | 7,9 t | 30 t (=300 Pers.) | 3,8 |

| | | | | |
|---|---|---|---|---|
| * für LZ 129 gerechnet als Rotationsellipsoid mit Achsenverhältnis 6:1 | | | | |

## Patentansprüche

1. Kreuzfahrt-Luftschiff, dessen Schiffskörper (S) die Form eines Ellipsoids besitzt,
**dadurch gekennzeichnet, daß**
das Ellipsoid drei aufeinander senkrecht stehende Achsen jeweils unterschiedlicher Längen aufweist, wobei eine Längsachse (L), die in Fahrbetriebsposition horizontal ausgerichtet ist, eine Querachse (Q), die in Fahrbetriebsposition horizontal ausgerichtet ist und auf der Längsachse (L) senkrecht steht, und eine Hochachse (H), die in Fahrbetriebsposition vertikal ausgerichtet ist, jeweils entsprechend die größte, mittlere bzw. geringste Länge besitzen, wobei sich die Achsenabschnitte der Längsachse (L), der Querachse (Q) und der Hochachse (H) verhalten wie l : q : h, wobei l im Bereich von 2,5 bis 3,5, q im Bereich von 1,5 bis 2,5 und h im Bereich von 0,5 bis 1, 5 liegt.

2. Luftschiff gemäß Anspruch 1, bei dem im Bereich der Enden der Längs- und Querachsen Aktuatoren (A) angeordnet sind, die zur Erzeugung eines steuerbaren Gebläsevortriebs eingerichtet sind.

3. Luftschiff gemäß Anspruch 2, bei dem an jedem Ende der Längs- und Querachsen mindestens ein Aktuator mit vertikalem Gebläsevortrieb und nahe den Enden der Längsachse jeweils mindestens ein Aktuator mit horizontalem Gebläsevortrieb angeordnet sind.

4. Luftschiff gemäß einem der vorhergehenden Ansprüche, bei dem Stabilisierungsflossen (F) vorgesehen sind, die geschwindigkeitsabhängig aus einem im Inneren des Schiffskörpers (S) versenkten Zustand in einen ausgefahrenen Zustand beweglich sind.

5. Luftschiff gemäß einem der vorhergehenden Ansprüche, bei dem die in Fahrbetriebsposition obere Hälfte des Schiffskörpers im wesentlichen vollständig mit permanent heliumgefüllten Gaszellen gefüllt ist und bei dem die untere Hälfte des Schiffskörpers heliumgefüllte Gaszellen enthält, die mit einer Helium-Temperiereinrichtung verbunden sind und deren Heliumgehalt veränderlich ist.

6. Luftschiff gemäß Anspruch 5, bei dem die Gaszellen in der unteren Hälfte des Schiffskörpers so angeordnet sind, daß auf eine obere, im wesentlichen ebene Begrenzung der unteren Hälfte eine gleichmäßig verteilte Auftriebskraft ausgeübt wird, und bei dem im oberen Drittel der unteren Hälfte des Schiffskörpers ein oder mehrere Passagierdecks angeordnet sind.

7. Luftschiff gemäß Anspruch 6, bei dem der Schiffskörper eine Außenummantelung aus Metall besitzt, die im Bereich der Passagierdecks zumindest teilweise durch eine durchsichtige Wandung ersetzt ist.

8. Luftschiff gemäß einem der vorhergehenden Ansprüche, bei dem l:q:h = 3:2:1 beträgt.

9. Luftschiff gemäß einem der vorhergehenden Ansprüche, bei dem eine Helium-Verflüssigungsanlage, die eine Wärmespeichereinrichtung zur Verdampfungsbeschleunigung und einen Vorratstank für flüssiges Helium aufweist, und/oder eine Helium-Temperieranlage vorgesehen ist, die eine Vielzahl von miteinander verbundenen Gaszellen umfaßt, die an ein Kälteaggregat angeschlossen sind, das zum Kühl- oder Heizbetrieb eingerichtet ist.

10. Luftschiff gemäß einem der vorhergehenden Ansprüche, bei der eine elektromagnetische Ankereinrichtung vorgesehen ist, die im verankerten Zustand am Erdboden mit einer Magnetplatte auf dem Erdboden eine Anziehungskraft bildet, die größer als die Summe aus Abreißkräften bei höchstmöglichen Windrücken und der Gewichtsverminderung des Luftschiffs bei vollständiger Entlastung der Passagierdecks ist.

11. Luftschiff gemäß Anspruch 10, bei dem der Schiffskörper an seiner Unterseite eine zur horizontalen Symmetrieebene des Schiffskörpers parallele, ebene, elliptische Abplattung aufweist, in der die Ankereinrichtung angebracht ist.

12. Luftschiff gemäß Anspruch 11, bei dem die Abplattung eine große Halbachse besitzt, an deren Enden Elektromagneten der Ankereinrichtung angebracht sind, oder bei dem die Abplattung kleine und große Halbachsen besitzt, wobei mindestens drei Magneten an Enden der Halbachsen angeordnet sind.

13. Luftschiff gemäß einem der vorhergehenden Ansprüche, bei der als mechanische Notankereinrichtung mehrere Bohreinrichtungen an der Unterseite des Schiffskörpers angeordnet sind, mit denen spiralförmige Bohranker in den Erdboden gesenkt werden können.

## Claims

1. Cruise-airship, the hull (S) of which has the configuration of an ellipsoid,
**characterised in that**
the ellipsoid has three axes which are perpendicular to each other and of different lengths respectively, a longitudinal axis (L), which is orientated horizontally in the travelling position, a transverse axis (Q), which is orientated horizontally in the travelling position and is perpendicular to the longitudinal axis (L), and a vertical axis (H), which is orientated vertically in the travelling position, having respectively the greatest, average or smallest length correspondingly, the axial portions of the longitudinal axis (L), of the transverse axis (Q) and of the vertical axis (H) having the ratio of l : q : h, l being in the range of 2.5 to 3.5, q in the range of 1.5 to 2.5 and h in the range of 0.5 to 1.5.

2. Airship according to claim 1, in which actuators (A) are disposed in the region of the ends of the longitudinal and transverse axes, said actuators being fitted in order to produce a controllable air-jet propulsion.

3. Airship according to claim 2, in which at least one actuator with vertical air-jet propulsion is disposed at each end of the longitudinal and transverse axes and at least one actuator with horizontal air-jet propulsion is disposed respectively near the ends of the longitudinal axis.

4. Airship according to one of the preceding claims, in which stabilising fins (F) are provided which, dependent upon the speed, are movable from a state where they are retracted in the interior of the hull (S) into a state where they are extended.

5. Airship according to one of the preceding claims, in which the upper half of the hull in the travelling position is essentially filled entirely with permanently helium-filled gas bags and in which the lower half of the hull contains helium-filled gas bags which are connected to a helium-tempering device and the helium content of which is changeable.

6. Airship according to claim 5, in which the gas bags are disposed in the lower half of the hull in such a manner that a uniformly distributed lifting force is exerted on an upper essentially level delimitation of the lower half, and in which one or more passenger decks is/are disposed in the upper third of the lower half of the hull.

7. Airship according to claim 6, in which the hull has an exterior casing made of metal which is replaced at least partly by a transparent wall in the region of the passenger deck.

8. Airship according to one of the preceding claims in which l : q : h = 3 : 2 : 1.

9. Airship according to one of the preceding claims, in which a helium-liquefying unit, which has a heat storage device for evaporation acceleration and a supply tank for liquid helium, and/or a helium-tempering arrangement is provided which comprises a multiplicity of gas bags which are connected together and are connected to a refrigeration unit which is fitted for the refrigeration or heating operation.

10. Airship according to one of the preceding claims, in which an electromagnetic anchor arrangement is provided which, when anchored to the ground by a magnetic plate, forms on the ground an attractive force which is greater than the sum of the breakaway forces during the highest possible wind gusts and reduction in weight in the airship upon complete load removal in the passenger deck.

11. Airship according to claim 10, in which the hull has on its underside a flat elliptical flattening which is parallel to the horizontal plane of symmetry of the hull, in which flattening the anchor arrangement is fitted.

12. Airship according to claim 11, in which the flattening has a large semi-axis, at the ends of which electromagnets of the anchor arrangement are fitted, or in which airship the flattening has small and large semi-axes, at least three magnets being disposed at the ends of the semi-axes.

13. Airship according to one of the preceding claims, in which a plurality of drilling appliances is disposed on the underside of the hull as a mechanical emergency anchor arrangement, by means of which drilling appliances spiral drilling anchors can be sunk into the ground.

## Revendications

1. Aéronef de croisière, dont la coque (S) a la forme d'un ellipsoïde, **caractérisé en ce que** l'ellipsoïde présente trois axes perpendiculaires les uns par rapport aux autres, chacun de longueur différente, un axe longitudinal (L), qui est orienté horizontalement dans la position de service, un axe transversal (Q), qui est orienté horizontalement en position de service et est perpendiculaire à l'axe longitudinal (L), et un axe vertical (H), qui est orienté verticalement en position de service, ayant chacun respectivement la longueur maximale, la longueur moyenne et la longueur minimale, les parties d'axe de l'axe longitudinal (L), de l'axe transversal (Q) et de l'axe vertical (H) se comportant comme l : q : h, l se situant dans la plage de 2,5 à 3,5, q dans la plage de 1,5 à 2,5 et h dans la plage de 0,5 à 1,5.

2. Aéronef selon la revendication 1, sur lequel des actionneurs (A) sont disposés dans la zone des extrémités des axes longitudinaux et transversaux, lesquels actionneurs sont mis en place pour générer une propulsion contrôlable de soufflerie.

3. Aéronef selon la revendication 2, sur lequel au moins un actionneur avec propulsion verticale de soufflerie est disposé à chaque extrémité des axes longitudinaux et transversaux et au moins un actionneur avec propulsion horizontale de soufflerie est disposé à proximité des extrémités de l'axe longitudinal.

4. Aéronef selon l'une quelconque des revendications précédentes, sur lequel il est prévu des ailerons de stabilisation (F) qui, en fonction de la vitesse, peuvent se déplacer à partir d'un état noyé à l'intérieur de la coque (S) dans un état déployé.

5. Aéronef selon l'une quelconque des revendications précédentes, sur lequel la moitié supérieure en position de service de la coque est remplie pratiquement complètement avec des cellules à atmosphère gazeuse remplies en permanence d'hélium et sur lequel la moitié inférieure de la coque contient des cellules à atmosphère gazeuse remplies d'hélium qui sont reliées à un système de mise en température à l'hélium et dont la teneur en hélium est variable.

6. Aéronef selon la revendication 5, sur lequel les cellules à atmosphère gazeuse sont disposées dans la moitié inférieure de la coque de telle façon qu'une force ascensionnelle uniformément répartie est exercée sur une limite supérieure, sensiblement plane, de la moitié inférieure, et sur lequel un ou plusieurs ponts passagers sont disposés dans le tiers supérieur de la moitié inférieure de la coque.

7. Aéronef selon la revendication 6, sur lequel la coque possède une enveloppe extérieure en métal, qui est remplacée dans la zone des ponts passagers au moins partiellement par une paroi transparente.

8. Aéronef selon l'une quelconque des revendications précédentes, sur lequel l : q : h = 3 : 2 : 1.

9. Aéronef selon l'une quelconque des revendications précédentes, sur lequel il est prévu une installation de liquéfaction à hélium, qui présente un dispositif de stockage de chaleur pour l'accélération de l'évaporation et une citerne de réserve pour l'hélium liquide, et/ou un appareil de mise en température à hélium, qui présente une pluralité de cellules à atmosphère gazeuse reliées entre elles, lesquelles sont raccordées à un groupe frigorifique aménagé pour le refroidissement ou le réchauffement.

10. Aéronef selon l'une quelconque des revendications précédentes, sur lequel il est prévu un système d'ancrage électromagnétique, qui forme dans l'état ancré au sol avec une plaque magnétique sur le sol une force d'attraction qui est supérieure au total des forces d'arrachement avec des vents arrière maximum et la réduction de poids de l'aéronef dans le cas d'un déchargement complet du pont passagers.

11. Aéronef selon la revendication 10, sur lequel la coque présente sur son côté inférieur une partie aplatie, elliptique, plane et parallèle au plan horizontal de symétrie de la coque, dans laquelle est disposé le système d'ancrage.

12. Aéronef selon la revendication 11, sur lequel la partie aplatie présente un grand demi-axe, sur les extrémités duquel sont disposés des électro-aimants du système d'ancrage, ou sur lequel la partie aplatie présente des demi-axes petits et grands, au moins trois aimants étant disposés sur les extrémités des demi-axes.

13. Aéronef selon l'une quelconque des revendications précédentes, sur lequel plusieurs systèmes de perçage sont disposés sur le dessous de la coque comme système mécanique d'ancrage de secours, avec lesquels des ancres de forage en forme de spirale peuvent être enfoncées dans le sol.
